# Europäisches Patentamt
# European Patent Office
# Office européen des brevets

(11) Publication number: **0 080 300**
**B1**

(12) **EUROPEAN PATENT SPECIFICATION**

(45) Date of publication of patent specification: **02.07.86**

(51) Int. Cl.⁴: **B 01 D 53/04, C 01 B 13/02**

(21) Application number: **82305991.0**

(22) Date of filing: **10.11.82**

(54) **Molecular sieve type gas separation systems.**

(30) Priority: **13.11.81 GB 8134294**

(43) Date of publication of application:
**01.06.83 Bulletin 83/22**

(45) Publication of the grant of the patent:
**02.07.86 Bulletin 86/27**

(84) Designated Contracting States:
**BE DE FR GB IT SE**

(56) References cited:
**EP-A-0 013 680**
**EP-A-0 017 155**
**GB-A-2 029 257**

(73) Proprietor: **NORMALAIR-GARRETT (HOLDINGS) LIMITED**
**Westland Works**
**Yeovil Somerset (GB)**

(72) Inventor: **Hamlin, Humphrey Albert Samuel**
**27 Bishopston**
**Montacute Somerset (GB)**
Inventor: **Marsh, Roger Malcolm**
**18 Harbour Way**
**Sherborne Dorset (GB)**

(74) Representative: **Jack, Bruce James et al**
**FORRESTER & BOEHMERT Widenmayerstrasse 4/I**
**D-8000 Munchen 22 (DE)**

Courier Press, Leamington Spa, England.

## Description

This invention relates to gas separation systems utilising molecular sieves and is especially concerned with the employment of such systems in the aviation field for obtaining oxygen-enriched air as a breathable gas for aircrew.

In a gas separation system utilising molecular sieves, a feed gas mixture is caused to flow through a bed of molecular sieve material having the capability of preferentially adsorbing and thereby retaining unwanted constituent(s) of the gas mixture while passing the wanted constituent(s): for instance, in the separation of oxygen from air a molecular sieve material Type 5A as available, for example, from BAYER AG and UNION CARBIDE CORPORATION may be used preferentially to adsorb and thereby to hold back nitrogen while passing oxygen to provide a delivery of a product gas that is approximately 95% oxygen. In the operation of such a system, the sieve material becomes progressively saturated with the adsorbed gas constituent(s), e.g. nitrogen, and eventually becomes incapable of retaining further amounts of such constituent(s). The sieve material of the bed therefore has to be regenerated from time to time to purge it of the retained constituent(s). Typically regeneration is effected by flushing the bed, usually in the reverse direction, with the product gas while the outflow from the bed is discharged, e.g. to atmosphere.

To provide for continuous delivery of the desired product gas, the system may include a reservoir for this and from which product gas is drawn for flushing the bed for regeneration purposes. Additionally or alternatively, the system may include a plurality of beds arranged to be utilised and regenerated in sequence to provide for continuous delivery of a required product gas.

A common manner of operating a gas separation system employing one or more molecular sieve beds involves charging the or each bed with feed gas mixture — e.g. air — under pressure and continuing the feed to the bed to maintain the charge pressure during delivery of the required product gas constituent(s) to use or storage. When the bed approaches saturation, the feed is discontinued and the bed vented to release the charge pressure, whereafter the bed is purged. The pressurising of the sieve bed promotes adsorption of the constituents to be retained by the bed, while the subsequent depressurising promotes desorption of the retained constituents to facilitate flushing of these from the bed. A system operated in this manner is referred to as a "pressure sieving gas separation system".

It is normally required that the oxygen concentration (partial pressure) in the breathable gas supplied to aircrew shall be related to cabin altitude, i.e. to the ambient pressure obtaining within their enclosure. Originally in proposed applications of molecular sieve gas separation to the production of breathable gas for aircrew, the system was treated as a source of substantially pure oxygen to be utilised in the manner traditional in aircrew breathable gas supply systems: that is to say, the substantially pure oxygen product gas delivered by the separation system was proposed to be diluted with air to provide a breathable gas mixture of the required oxygen partial pressure, in a manner analogous to the utilisation of the oxygen obtained from sources such as high pressure storage bottles and liquid oxygen converters.

The utilisation of a product gas that is substantially pure oxygen for producing oxygen-enriched air as breathable gas involves the use of appropriate mixing valves and related control devices to derive the desired breathable gas mixture. Such valves and control devices tend to be heavy and to be potentially unreliable through their inclusion of capsules and the like for sensing ambient pressure changes. It has been proposed, therefore, to produce a breathable gas of the required oxygen partial pressure directly from a molecular sieve system rather than by downstream dilution.

One such proposal is GB—A—2,029,257 (Linde), which discloses producing respiration air for breathing by a person or persons in the pressurised cabin of an aircraft and having an oxygen concentration dependent on altitude, by a method comprising obtaining the total volume of respiration gas required in normal continuous service solely by the controlled adsorptive removal of nitrogen from compressed air by means of reversible adsorbers operated in a cycle comprising adsorption and reverse desorption phases, said adsorbers being so operated that, during each adsorption phase, a continuously increasing proportion of nitrogen passes through to the outlet end of the adsorber on stream and the oxygen concentration of the respiration gas formed being adjusted within permissible range in accordance with the cabin pressure by controlling the amount of gas flowing through the adsorbers and/or the ratio of adsorption to desorption pressure.

In the operation of a molecular sieve bed for the controlled adsorption of nitrogen from compressed air, if the bed material is initially substantially free of adsorbed nitrogen the product gas deriving from compressed air passed through the bed will initially comprise mainly oxygen. As air continues to be passed through it, the bed becomes progressively saturated with nitrogen, a saturation front moving through the bed from its inlet to its outlet end. This front is preceded by a band of partial saturation in which there is increasing retention of nitrogen from the leading edge of the band towards the saturation front. If the bed is maintained on-stream after the leading edge of this partial saturation band has reached the outlet end of the bed, the product gas delivered will exhibit a falling oxygen content (rising nitrogen content) until the saturation front reaches the outlet end of the bed, when the nitrogen content of the product gas will approximate that of the compressed air fed to the bed.

The method proposed in GB—A—2,029,257 is based upon the principle that product gas of the required average oxygen content is obtained by operating the adsorber(s) in such manner that in the course of the on-stream adsorption phase the leading edge of the band of partial saturation breaks out of the outlet end of the bed to a greater or lesser extent. For brevity, such mode of operation is termed herein "operation in a partially saturated condition".

In the method disclosed in GB—A—2,029,257 this operation of the adsorber(s) in a partially saturated condition is achieved by maintaining constant the durations of the respective phases of the operating cycle at appropriate values, the amount of gas flowing through the adsorber(s) when on-stream being adjusted, possibly in conjunction with adjustment of the desorption pressure (relative to a constant adsorption pressure) at the outset of regeneration, to set the average oxygen content of the delivered gas at the level required. The product gas is collected in a buffer tank or reservoir and adjustment of the amount of gas flowing through an adsorber during its on-stream phase is accomplished by discharging to waste a greater or lesser amount of product gas, surplus to contemporary respiration gas requirements, from the buffer tank.

Another proposal for producing breathable gas of a required oxygen concentration directly from a molecular sieve separation system is EP—A—0,046,369 (Normalair-Garrett) filed as Application No. 81303677.9 on 12th August 1981 (priority date 8th August 1980) but not published at the priority date hereof. The method of that proposal involves control of the regeneration of the adsorber bed or beds to maintain delivery of a product gas having the desired oxygen partial pressure. In preferred embodiments, this control of the regeneration is exercised by a microprocessor that also can provide a variety of other useful system functions.

The system disclosed in EP—A—0,046,369 was originally envisaged primarily for use on advanced high performance combat aircraft, possibly with development potential still to be realised, so that the scope accorded by microprocessor-based control was not out of place and, indeed lends itself to the introduction of more advanced life support systems. However, with the potential use of molecular sieve gas separation to produce breathable gas for the crew of more cost-conscious aircraft such as trainers, the emphasis is now on the attraction of simple systems needing minimal ground servicing. An objective of the present invention is therefore to meet this need and, especially, to avoid the complexity of control arrangements that involve feed-back loops.

According to the present invention a method of producing oxygen-enriched air having a physiologically acceptable oxygen content for breathing on board an aircraft, by the use of an on-board molecular sieve system comprising at least one sieve bed to decrease to a selected variable extent the non-oxygen content of air supplied to the system and controlled in such manner that the/or each sieve bed of the system is cyclically subjected to a charge/adsorption on-stream phase followed by a purge/desorption regeneration phase during which the gas pressure in the bed at least substantially equals the ambient atmospheric pressure or a pressure related thereto, to operate continually in a partially saturated condition, is characterised by sensing the ambient atmospheric pressure or a pressure related thereto and adjusting, at selected altitude thresholds, the overall cycle time and/or the relative durations of said phases in such manner that within a range of altitude extending from such a threshold the cycle time and the relative durations of the phases are fixed at respective values such that the oxygen content of the oxygen-enriched air delivered by the system remains within physiologically acceptable limits for breathing within that altitude range.

In certain embodiments of this method, the system is so controlled that at least within one said altitude range the phase relative durations are in the ratio 2:1 in favour of the charge/adsorption phase.

Preferably the system is so controlled that the phase relative durations are maintained in fixed ratio whereas, with increasing altitude, stepwise reductions in overall cycle time are provided at successive said altitude thresholds.

In the purge/desorption phase it will usually be preferable for obtaining best efficiency that the gas pressure in the bed be reduced to the lowest available pressure, that is, the ambient atmospheric pressure external to the aircraft; however in some circumstances the gas pressure in the bed may be reduced only to cabin pressure, which at any given altitude is directly related to the ambient atmospheric pressure.

The invention also provides a molecular sieve type gas separation system, for carrying out the method of the invention, that is characterised by control means that include means responsive to ambient atmospheric pressure or to a pressure related thereto and are constructed and arranged to adjust, at selected altitude thresholds, the overall cycle time and/or the relative durations of the charge-adsorption and purge/desorption phases to respective values that are fixed for an altitude range extending from such a threshold and are such that the oxygen content of the air delivered by the system remains within physiologically acceptable limits for breathing within that altitude range.

The control means may comprise a fixed logic sequencer controlling the sequential operation of a charge valve and a vent valve associated with the or each said bed.

The invention will now be further described by way of example and with reference to the accompanying drawings in which:

FIGURE 1 is a schematic representation of a molecular sieve gas separation system, including three beds, suitable for on-board aircraft installation for carrying out the method of the invention;

FIGURE 2 is a diagram showing the operating sequence of the principal valves of the system shown in Figure 1;

FIGURE 3 is a graph showing the band of oxygen concentration available from two particular grades of molecular sieve material and the band for the physiological requirement for oxygen, from ground level to 10,000 metres altitude;

FIGURE 4 is a graph showing an acceptable band of oxygen concentration against the physiological requirement for oxygen from ground level to 8,500 metres altitude;

FIGURE 4A is a histogram showing the ratio of charge/adsorption phase duration to purge/desorption phase duration in the total cycle time for obtaining the acceptable band of oxygen concentration shown in Figure 4;

FIGURE 5 is a graph similar to Figure 4, showing closer to optimum bands of oxygen concentration which are obtainable within bands of altitude between ground level and 10,000 metres; and

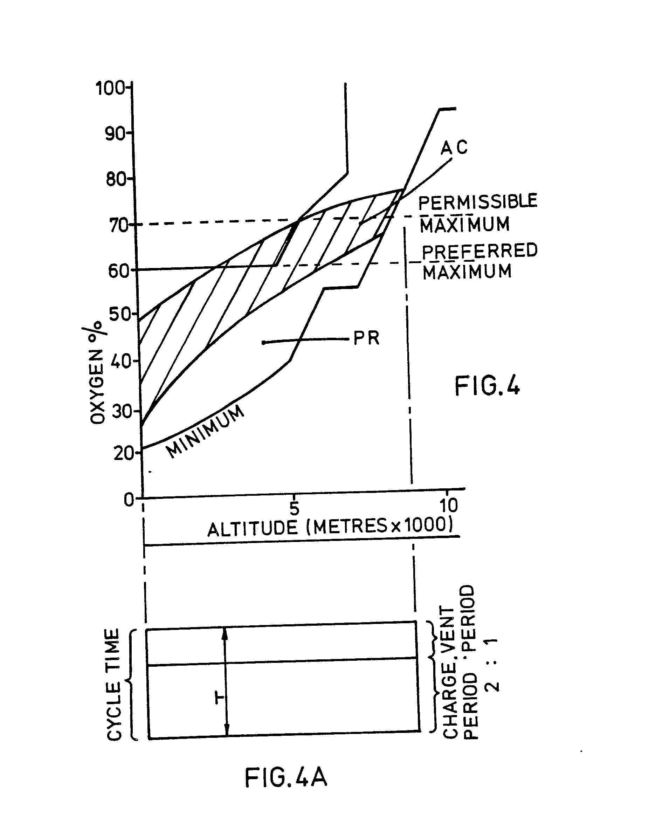

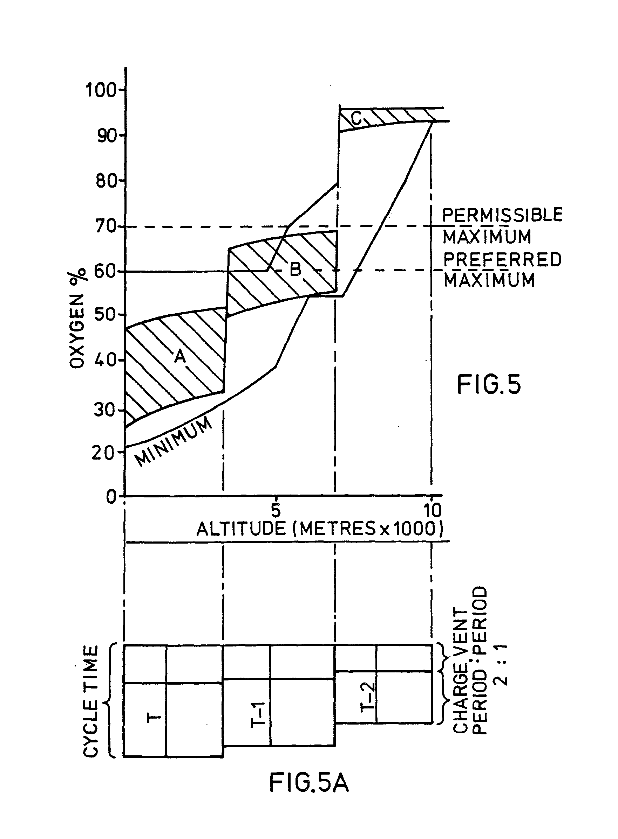

FIGURE 5 is a histogram similar to Figure 4A, showing the ratio of the respective phase durations for the modified cycle times required to obtain the bands of oxygen concentration shown in Figure 5.

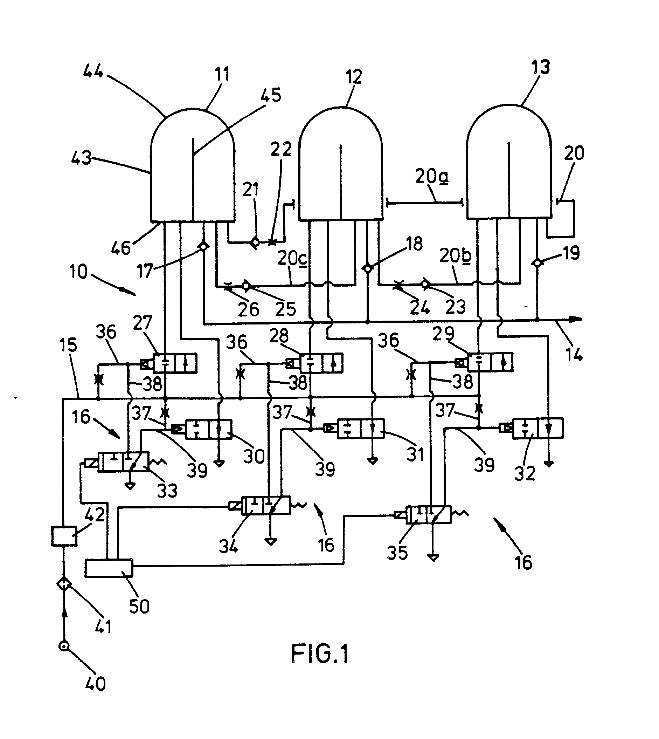

Referring to Figure 1, a molecular sieve gas separation system 10 embodying the invention comprises three molecular sieve beds 11, 12, 13, suitably contained and arranged to deliver product gas to a delivery line 14. The sieve beds 11, 12, 13 are arranged for receiving compressed air from a supply line 15 under the control of three similar valve arrangements 16.

The sieve beds are suited to the adsorption of nitrogen by use of Type 5A molecular sieve material while passing oxygen so that the product gas delivered to line 14 is oxygen-enriched air having an oxygen partial pressure determined by the operation of the system as explained hereinafter.

The sieve beds 11, 12, 13 are connected to the delivery line 14 by way of pressure opening valves 17, 18, 19, respectively, and are also connected in series, one to another, by a purge loop 20. Between beds 11 and 13, in section 20*a* of the loop 20, is included a pressure opening valve 21 upstream of a flow regulating orifice 22; in section 20*b* between beds 13 and 12 a pressure opening valve 23 is positioned upstream of a flow regulating orifice 24; and, likewise, in section 20*c* between beds 12 and 11 a pressure opening valve 25 is positioned upstream of a flow regulating orifice 26.

Each valve arrangement 16 controls both a charge inlet port and a vent port of a single sieve bed and comprises a charge valve and a vent valve of similar construction, controlled by a servo valve. Thus the sieve beds 11, 12, 13 are arranged to be connected to the supply line 15 via charge valves 27, 28, 29, respectively, and to be connected to ambient atmospheric pressure or to a pressure directly related thereto via vent valves 30, 31, 32, respectively.

The servo chambers of the pairs of charge and vent valves 27/30, 28/31 and 29/32 are connected to the supply line 15 and also to servo valves comprising solenoid operated bleed switching valves 33, 34, 35. The switching valves 33, 34, 35, are actuated by a fixed logic sequencer 50 having in this embodiment, an operating ratio of 2:1. The switching valves 33, 34, 35 serve the pairs of charge and vent valves 27/30, 28/31 and 29/32, respectively, and provide that while a charge valve is open its companion vent valve is closed and vice versa. The sequencer 50 is so connected to the switching valves as to cause the open duration of a charge valve to be twice that of the associated vent valve in an operating cycle.

The cross-sectional area of the vent flow path from a sieve bed is greater than the corresponding area of the supply air flow path into the bed.

In this embodiment it is preferred that the pressure opening valves 17, 18, 19, 21, 23, 25; the charge valves 27, 28, 29; and the vent valves 30, 31, 32 be all of the resilient diaphragm type (not illustrated structurally).

The charge valves and the vent valves are arranged for their diaphragms to be pressure closed upon the respective valve seats by supply pressure fed to their servo chambers via restricted ducts 36, 37, respectively, and for relief of these chambers via unrestricted ducts 38, 39, respectively. The pressure opening valves 17, 18, 19 and 21, 23, 25 utilise perforated diaphragms urged to close upon their seats against upstream pressure with a predetermined force applied by a compression spring, which in this embodiment is equivalent to, say 69 kPa (10 psi) in the case of the purge loop valves 21, 23, 25, and 14 kPa (2 psi) in the case of the product delivery line valves 17, 18, 19.

Whilst the sieve beds 11, 12, 13 may be of any profile and form which is suitable to the system and an available space envelope, in this embodiment each sieve bed container comprises a tube 43 having one end closed by a hemispherical wall 44 and the opposite end secured to a base plate 46. The container is divided internally by a diametrical wall 45 extending from the base plate 46 to terminate short of the hemispherical wall 44. The base plate 46 is provided with a charge inlet port and a vent port positioned at one side of the dividing wall 45, and a purge loop connection and a delivery line connection positioned at the other side of the dividing wall.

In the usual aircraft application, the system delivers oxygen-enriched air as breathable gas to aircrew by way of oronasal breathing masks. Supply air is obtained from an engine source 40 of the aircraft and fed into the supply line 15 to the sieve beds by way of a filter 41 disposed upstream of a suitable pressure control valve 42 which, for example, may be set to open to a source pressure of 276 kPa (40 psi) and control at 310 kPa (45 psi). The delivery line 14 feeds to oronasal breathing mask(s) (not shown) by way of a demand type breathable gas regulator of suitable form (not shown), upstream of which is a standby pressurised breathable gas source (not shown), such as an oxygen cylinder for providing 100% oxygen deliverable to the regulator in conditions of low supply-air pressure, low cabin pressure or low concentration (partial pressure) of oxygen in the product gas delivered from the molecular sieve beds. The standby gas source may be activated by any suitable monitor/activator system.

In operation, a desired concentration (partial pressure) of oxygen in the delivered product gas, such as to provide, say, the equivalent of air at an altitude of 1,500 metres (5,000 feet) is maintained by control of the operating cycle parameters of the molecular sieve beds 11, 12, 13 so that these are continually operated in the partially saturated condition.

In the illustrated embodiment, the beds 11, 12, 13 are placed on-stream and regenerated in alternating and overlapping sequence by operation of the valve arrangements 16 in which the solenoid operated switching valves 33, 34, 35 are controlled by the fixed logic sequencer 50 alternately to open and close the charge and vent ports of their respective beds by alternate connection of the respective servo chambers of the charge valves 27, 28, 29 and vent valves 31, 32, 33 to, preferably, external ambient, or to the aircraft cabin. As previously stated, the sequencer is arranged to control the charge valves and vent valves so that the former are open for durations twice as long as the open durations of the vent valves. Control of the purge flow from each bed and of the delivery flow of product gas therefrom is automatically achieved by means of the pressure opening valves 21, 23, 25 and 17, 18, 19, respectively.

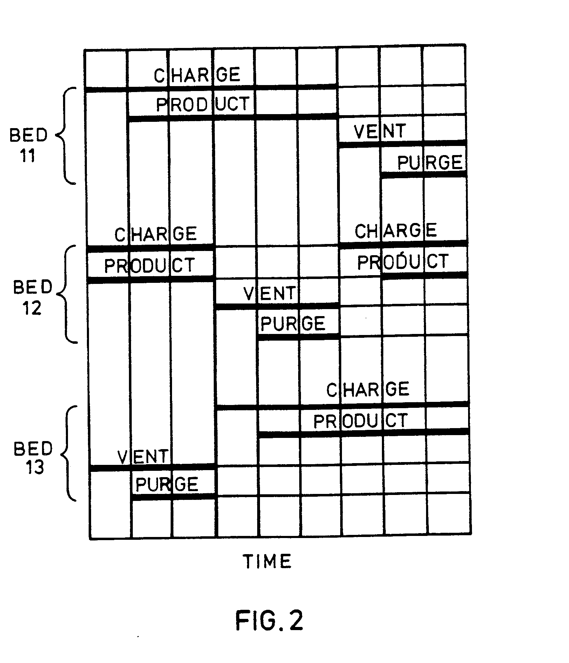

The operation of all the valves to achieve the overlapping sequence of the respective operating cycles of the three beds is best understood with reference to Figure 2. Thus the opening of the charge valve 27 of, nominally, the first bed 11 in the sequence occurs when the switching valve 33 is set by the sequencer 50 to hold servo pressure in the vent valve 30 and to release it from the charge valve 27. This causes supply air to be fed into the bed wherein nitrogen is adsorbed by the molecular sieve material, oxygen-enriched air passing into the delivery line 14 when pressure in the bed has built up to that required for opening of the valve 17. At the end of this charge/adsorption phase of the operation of bed 11, that is two-thirds of the way through the operating cycle for that bed, the switching valve 33 is reversed to cause closing of the charge valve 27 and opening of the vent valve 30, whereupon the bed 11 becomes open to external ambient or cabin pressure so that pressure in the bed falls, causing desorption of nitrogen from the sieve material. The reducing pressure in the bed 11 and in that part of section 20c of the purge loop 20 which is downstream of the valve 25 allows the latter to open when the pressure difference across the valve 25 exceeds the closing load, so that initial stage product gas from the overlapping, sequentially second, bed 12 flows into bed 11 to purge it clean.

As is apparent from Figure 2, the closure of the charge valve 27 for the bed 11 coincides with opening of the charge valve 28 for the bed 12, while subsequent closing of the charge valve 28 for the bed 12 coincides with opening of the charge valve 29 for the bed 13. The opening of the charge valve 27 also coincides with the closing of the charge valve 29.

Thus compressed supply air is admitted cyclically to the beds 11, 12, 13 by way of the respective sequencer controlled valve arrangements 16 and when a bed is on-stream, oxygen-enriched air flows from the bed into the delivery line. Shortly after switching of the charge valve and vent valves of an on-stream bed to opposite mode, that bed is purged by new product gas from one of the other beds coming on-stream. Thus product from bed 11 purges bed 13; product from bed 12 purges bed 11; and product from bed 13 purges bed 12. Evenness of flow to the delivery line 14 is not lost during the withdrawal of some product gas from one bed for the purpose of purging another bed, because at that time the third bed is also delivering product gas.

Variation in the partial pressure (concentration) of oxygen in the oxygen-enriched air delivered by the system occurs with change in pressure of the external ambient or cabin to which the beds are vented during the regeneration phase. The concentration of oxygen in the delivered air increases with reducing ambient or cabin pressure. This occurs because the rate of desorption of nitrogen from the sieve material increases as the pressure in the bed during the regeneration phase is reduced, so that regeneration becomes more complete, for a given regeneration phase duration, as the pressure during regeneration is reduced. Thus without adjustment of the system, the concentration of oxygen in the product gas automatically changes to remain satisfactory for breathing by aircrew for most presently known operational requirements up to a cabin altitude (pressure) of 6,000 metres (20,000 feet), if the system operating parameters are appropriately chosen.

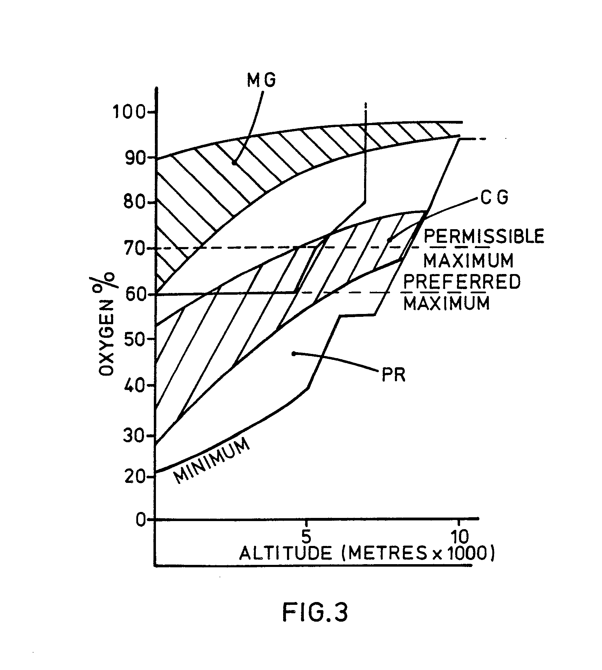

In investigating various types of molecular sieve material we have found that the ability of a sieve bed to adsorb nitrogen varies according to the molecular sieve material. For example, a medical grade Type 5A sieve material is appreciably more efficient than a commercial grade Type 5A sieve material so that a system having beds of this material needs to have its operating parameters chosen to provide at lower altitudes greater degradation of performance by partial saturation, to obtain an oxygen concentration in the product gas appropriate to the pertaining altitude, than is required if the system beds contain commercial grade material. Figure 3 illustrates the performance differences of the two grades of Type 5A bed material and is a graph which plots percentage concentration of oxygen against altitude, showing a band, reference MG, of concentration of oxygen available from a medical grade material, a band, reference CG, of concentration of oxygen available from a commercial grade material, and a band, reference PR, of the physiological requirement for oxygen from ground level to 10,000 metres (33,000 feet) cabin altitude.

Thus, we have found that by selection of a suitable molecular sieve material for the system beds and suitable fixed operating parameters such as cycle time and relative phase durations, it is possible to provide a simple system which will produce an acceptable, although less than optimum, oxygen concentration over a range of altitude. This can be seen in the graph of Figure 4 which shows a representative acceptable band of concentration of oxygen, reference AC, and the band for the physiological requirement for oxygen, reference PR, from ground level to approximately 8,500 metres (28,000 feet) cabin altitude. Figure 4A is a histogram showing that for a fixed cycle time T the charge/adsorption phase duration to obtain this performance with the system considered is twice that of the purge/desorption (vent) phase duration.

We have found that an improvement over this acceptable, although less than optimum, band of concentration of oxygen can be made, especially if the selected sieve material is of medical grade, if the cycle time (T) is reduced in steps with increasing altitude. Two stepwise reductions in cycle time with increasing altitude are shown in the histogram of Figure 5A and reference to the graph shown in Figure 5 illustrates that these reductions introduced at cabin altitude thresholds of 3,000 metres (10,000 feet) and 6,700 metres (22,000 feet) give three different bands of oxygen concentration in the product gas for three bands of altitude. In the two lower altitude bands the oxygen concentration bands, reference A and B, are closer to the corresponding means of the band for physiological requirement, reference PR, whilst at altitudes above 6,700 metres (22,000 feet) the band of oxygen concentration, reference C, is maintained substantially at the highest enrichment level obtainable from a molecular sieve oxygen generator system, i.e. in the order of 94 to 95 per cent. In the lower region of the altitude band 3,000 to 6,700 metres, the oxygen concentration is greater than is physiologically necessary, but this is not medically detrimental. However, if desired one or more additional thresholds may be introduced for changes of cycle time and so provide concentration bands that approach more closely to the physiological requirement. The different altitude thresholds can be sensed by pressure transducer means, for example an altitude switch, arranged to modify the output signal of the sequencer 50 to reduce the cycle time for the next higher altitude band.

**Claims**

1. A method of producing oxygen-enriched air having a physiologically acceptable oxygen content for breathing on board an aircraft, by the use of an on-board molecular sieve system (10) comprising at least one sieve bed (11, 12, 13) to decrease to a selected variable extent the non-oxygen content of air (15) supplied to the system (10) and controlled in such manner that the/or each sieve bed (11, 12, 13) of the system is cyclically subjected to a charge/adsorption on-stream phase followed by a purge/desorption regeneration phase during which the gas pressure in the bed at least substantially equals the ambient atmospheric pressure or a pressure related thereto, to operate continually in a partially saturated condition, characterised by sensing the ambient atmospheric pressure or a pressure related thereto and adjusting, at selected altitude thresholds, the overall cycle time and/or the relative durations of said phases in such manner that within a range of altitude extending from such a threshold the cycle time and the relative durations of the phases are fixed at respective values such that the oxygen content of the oxygen-enriched air delivered by the system remains within physiologically acceptable limits for breathing within that altitude range.

2. A method according to claim 1, further characterised in that the system is so controlled that at least within one said altitude range the phase relative durations are in the ratio 2:1 in favour of the charge/adsorption phase.

3. A method according to claim 1 or 2, further characterised in that the system is so controlled that the phase relative durations are maintained in fixed ratio whereas, with increasing altitude, stepwise reductions in overall cycle time are provided at successive said altitude thresholds.

4. A molecular sieve type gas separation system (10) for carrying out the method of any one of claims 1 to 3, characterised by control means (16) that include means responsive to ambient atmospheric pressure or to a pressure related thereto and are constructed and arranged to adjust, at selected altitude thresholds, the overall cycle time and/or the relative durations of said charge/adsorption and purge/desorption phases to respective values that are fixed for an altitude range extending from such a threshold and are such that the oxygen content of air delivered by the system remains within physiologically acceptable limits for breathing within that altitude range.

5. A system according to claim 4, further characterised in that said control means (16) comprise a fixed logic sequencer (5) controlling the sequential operation of a charge valve (27, 28, 29) and a vent valve (30, 31, 32) associated with the or each said bed (11, 12, 13).

**Patentansprüche**

1. Verfahren zum Herstellen sauerstoffangereicherter Luft, die einen zum Einatmen an Bord eines Flugzeuges physiologisch akzeptablen Sauerstoffgehalt aufweist, durch Verwendung eines an Bord befindlichen Molekularsieb-Systems (10), das wenigstens ein Siebbett (11, 12, 13) aufweist, um den Nichtsauerstoff-Gehalt der Luft (15), die dem System (10) zugeführt wird, auf eine ausgewählte variable Größe abzusenken, und das derart gesteuert wird, daß das oder jedes Siebbett (11, 12, 13) des Systems zyklisch einer Beladungs-/Adsorptions-Betriebsphase unterworfen wird, gefolgt von einer Reinigungs-/Desorptions-Regenerationsphase, während der der Gasdruck im Bett wenigstens im wesentlichen mit dem atmosphärischen Umgebungsdruck oder einem darauf bezogenen Druck übereinstimmt, um immer wieder in einem partiell gesättigten Zustand zu arbeiten, dadurch gekennzeichnet, daß der atmosphärische Umgebungsdruck oder ein darauf bezogener Druck mit einem Fühler ermittelt wird und die Gesamtzyklusdauer und/oder die relativen Zeiträume besagter Phasen bei ausgewählten Höhenstufen derart eingestellt wird, daß die Zyklusdauer und die relativen Zeiträume der Phasen innerhalb eines Höhenbereiches, der sich von solch einer Stufe aus erstreckt, auf ensprechende Werte festgesetzt werden, so daß der Sauerstoffgehalt der sauerstoffangereicherten Luft, die vom System geliefert wird, innerhalb zum Einatmen in jenem Höhenbereich physiologisch akzeptablen Grenzen bleibt.

2. Verfahren nach Anspruch 1, weiter dadurch gekennzeichnet, daß das System so gesteuert wird, daß wenigstens in einem besagten Höhenbereich die phasenbezogenen Zeiträume im Verhältnis 2:1 zugunsten der Beladungs-/Adsorptionsphase stehen.

3. Verfahren nach Anspruch 1 oder 2, weiter dadurch gekennzeichnet, daß das System so gesteuert wird, daß die phasenbezogenen Zeiträume in festgelegtem Verhältnis gehalten werden, wohingegen mit zunehmender Höhe stufenweise Verminderungen der Gesamtzyklusdauer bei aufeinanderfolgenden besagten Höhenstufen vorgesehen werden.

4. Gastrennungssystem (10) mit Molekularsieben zum Durchführen des Verfahrens nach einem der Ansprüche 1 bis 3, gekennzeichnet durch Steuereinrichtungen (16), die Einrichtungen einschließen, die auf atmosphärischen Umgebungsdruck oder einen darauf bezogenen Druck ansprechen, und konstruiert und angeordnet sind, um die Gesamtzyklusdauer und/oder die relativen Zeiträume besagter Beladung-/Adsorptions- und Reinigungs-/Desorptionsphasen bei ausgewählten Höhenstufen auf entsprechende Werte einzustellen, die für einen Hoenbereich, der sich von solch einer Stufe aus erstreckt, festgelegt sind und derart aussehen, daß der Sauerstoffgehalt der Luft, die von dem System geliefert wird, innerhalb zum Einatmen in jenem Höhenbereich physiologisch akzeptablen Grenzen bleibt.

5. System nach Anspruch 4, weiter dadurch gekennzeichnet, daß besagte Steuereinrichtungen (16) ein festgestellte, logische Folgesteuerungseinheit (5) aufweist, die die sequentielle Arbeitsweise eines Einlaßventils (27, 28, 29) und eines Auslaßventils (30, 31, 32), die mit dem oder jedem besagten Bett (11, 12, 13) verbunden sind, steuert.

## Revendications

1. Procédé de production d'air enrichi en oxygène ayant une concentration en oxygène physiologiquement acceptable pour la respiration à bord d'un aéronef, par utilisation d'un système (10) à tamis moléculaire embarqué comprenant au moins un lit de tamisage (11, 12, 13) pour diminuer à un degré variable choisi la concentration en non oxygène de l'air (15) fourni au système (10) et commandé de manière telle que le ou chaque lit de tamisage (11, 12, 13) du système est soumis cycliquement à une phase de charge/adsorption en service suivie par une phase de régénération par purge/désorption pendant laquelle la pression de gaz dans le lit est au moins sensiblement égale à la pression atmosphérique ambiante ou à une pression liée à celle-ci, de manière à toujours fonctionner dans un état partiellement saturé, caractérisé en ce qu'il consiste à détecter la pression atmosphérique ambiante ou une pression liée à celle-ci, et à régler, à des seuils d'altitude choisis, la durée totale du cycle et/ou les durées relatives desdites phases d'une manière telle que, dans une plage d'altitude partant d'un tel seuil, la durée de cycle et les durées relatives des phases sont fixes, à des valeurs respectives telles que la concentration en oxygène de l'air enrichi en oxygène, fourni par le système, reste dans des limites physiologiquement acceptables pour la respiration dans cette plage d'altitude.

2. Procédé suivant la revendication 1, caractérisé en ce que le système est commandé de sorte qu'au moins dans une dite plage d'altitude les durées relatives des phases sont dans le rapport 2:1 en faveur de la phase charge/adsorption.

3. Procédé suivant la revendication 1 ou 2, caractérisé en ce que le système est commandé de sorte que les durées relatives des phases sont maintenues dans un rapport fixe tandis que, lorsque l'altitude augmente, des réductions par paliers de la durée totale du cycle sont prévues auxdits seuils d'altitude successifs.

4. Système (10) de séparation de gaz du type à tamis moléculaire pour la mise en oeuvre du procédé suivant l'une quelconque des revendications 1 à 3, caractérisé par des moyens de commande (16) qui comprennent des moyens sensibles à la pression atmosphérique ambiante ou à une pression liée à celle-ci et qui sont construits et agencés pour régler, à des seuils d'altitude choisis, la durée totale de cycle et/ou les durées relatives des phases de charge/adsorption et de purge/désorption à des valeurs respectives qui sont fixes pour une plage d'altitude partant d'un tel seuil et qui sont telles que la concentration en oxygène de l'air fourni par le système reste dans des limites physiologiquement acceptables pour la respiration dans cette plage d'altitude.

5. Système suivant la revendication 4, caractérisé en ce que lesdits moyens de commande (16) comprennent un séquenceur logique fixe (5)

13

**0 080 300**

14

commandant le fonctionnement séquentiel d'une vanne de charge (27, 28, 29) et d'une vanne d'évent (30, 31, 32) associée au lit ou à chaque lit (11, 12, 13).

8

FIG.1

FIG. 2

FIG.3

0 080 300

FIG.4

FIG.4A

4

FIG.5

FIG.5A